# EUROPÄISCHE PATENTANMELDUNG

(11) **EP 1 206 074 A2**
(43) Veröffentlichungstag der Anmeldung: **15.05.2002**
(21) Anmeldenummer: 01125701.1
(22) Anmeldetag: 27.10.2001
(51) Int. Cl.: H04L 12/437

(54) **Verfahren zur Steuerung der Datenübertragung in einem Netzwerk**

(30) Priorität: 10.11.2000 DE 10055863
(71) Anmelder: BECKER GmbH, D-76307 Karlsbad (DE)
(72) Erfinder: Becker, Michael, 76661 Philippsburg (DE); Bähren, Frank, 76137 Karlsruhe (DE); Stiegler, Andreas, 76275 Ettlingen (DE)
(74) Vertreter: Patentanwälte Westphal, Mussgnug & Partner

(57) **Zusammenfassung**

In einem in einem Kraftfahrzeug eingebauten ringförmigen MOST-Netzwerk sind mehrere Einheiten (1-10) mittels mehrerer Verbindungsabschnitte (V1-V10) miteinander vernetzt, die als Datenquelle, Datensenke oder Transceiver fungieren. Mindestens ein Teil der Einheiten (1-10) ist mit zwei oder mehr Transceiverbausteinen (TC) ausgerüstet. Um die Prozessoren derjenigen Einheiten (1-10) mit mehr als einem Transceiverbaustein (TC) zu entlasten, ist in jeder Einheit (1-10) mit mehr als einem Transceiverbaustein (TC) nur eine einzige Netzwerkverwaltung für alle Transceiverbausteine (TC) dieser Einheit vorgesehen.

## Beschreibung

Die Erfindung betrifft ein Verfahren zur Steuerung der Datenübertragung in einem Netzwerk, das mehrere Einheiten miteinander vernetzt, die als Datenquelle, Datensenke oder Transceiver dienen und von denen mindestens ein Teil mit zwei oder mehr Transceiverbausteinen ausgerüstet ist.

Nach dem neuesten Stand der Technik ausgestattete Kraftfahrzeuge, wie z. B. PKW, LKW und Omnibusse, sind mit einer Multimediaanlage ausgerüstet, die z. B. aus einem sogenannten ringförmigen MOST-Netzwerk aufgebaut ist, das mehrere Einheiten miteinander vernetzt, die je nach Bedarf als Datenquelle, Datensenke oder Transceiver fungieren.

So kann ein MOST-Netzwerk in einem Kraftfahrzeug beispielsweise einen Rundfunkempfänger, einen Fernsehempfänger, Bildschirme, einen CD-Spieler, einen DVD-Spieler, einen CD- oder einen DVD-Wechsler, einen Cassettenrecorder, aktive Lautsprecher, eine Navigationsanlage, ein Autotelefon, ein schnurloses Telefon sowie Bedien- und Steuereinheiten miteinander vernetzen, um nur einige Beispiele für die Einheiten zu nennen.

Beispielsweise können in den aufgezählten Geräten zwei oder mehr Transceiver in Reihe geschaltet sein, obwohl das Gerät nach außen nur einen Eingang und einen Ausgang aufweist. Aus der Sicht des Netzwerkes werden jedoch die Transceiver in einem Gerät wie eigenständige Netzwerkteilnehmer angesehen, was es erforderlich macht, dass im Gerät die Netzwerkverwaltung für alle in diesem Gerät vorgesehenen Transceiver bereitgestellt werden muss. Diese Maßnahme belastet aber den Prozessor des Gerätes stark.

Es ist daher Aufgabe der Erfindung, ein Verfahren zur Steuerung eines mehrere Einheiten miteinander vernetzenden Netzwerkes so zu gestalten, dass die Prozessoren der einzelnen Einheiten entlastet werden.

Die Erfindung löst diese Aufgabe mit den im Anspruch 1 angegebenen Merkmalen dadurch, dass in jeder Einheit mit mehr als einem Transceiverbaustein nur eine einzige Netzwerkverwaltung für alle Transceiverbausteine dieser Einheit vorgesehen ist.

Durch die erfindungsgemäße Maßnahme, in jeder Einheit mit mehr als einem Transceiverbaustein nur eine einzige Netzwerkverwaltung für die Transceiverbausteine vorzusehen, werden die Prozessoren dieser Einheiten stark entlastet. Aus der Sicht des Netzwerkes erscheinen die Transceiver einer Einheit nicht mehr wie eigenständige Netzwerkteilnehmer. Vielmehr sieht das Netzwerk einen nichtintelligenten Knoten, der von einem intelligenten Knoten gesteuert wird.

Die Erfindung ist insbesondere für ein ringförmiges MOST-Netzwerk geeignet.

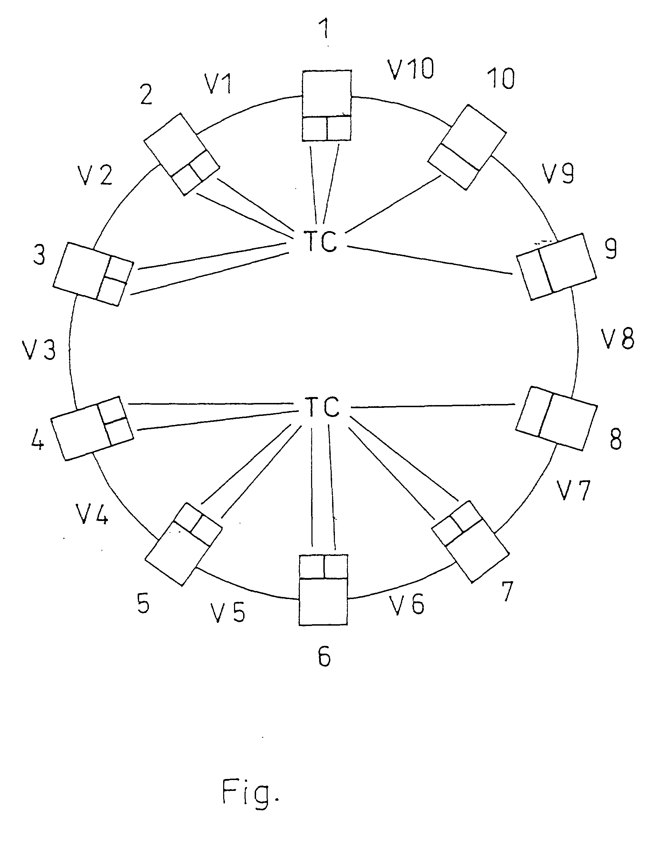

In der Figur ist ein ringförmiges MOST-Netzwerk mit zehn Einheit 1 bis 10 gezeigt, die durch Verbindungsabschnitte V1 bis V10 untereinander vernetzt sind. In den Einheiten 1 bis 7 sind z. B. zwei Transceiverbausteine TC, in den Einheiten 8 bis 10 dagegen nur ein Transceiverbaustein TC angeordnet. Die die einzelnen Einheiten 1 bis 10 verbindenden Verbindungsabschnitte V1 bis V10 können beispielsweise als Kabel oder als Lichtleiter ausgeführt sein.

### Bezugszeichenliste

- 1 - 10: Einheiten
- V1 - V10: Verbindungsabschnitte
- TC: Transceiverbaustein

## Patentansprüche

1. Verfahren zur Steuerung der Datenübertragung in einem Netzwerk, das mehrere Einheiten (1-10) über Verbindungsabschnitte (V1-V10) miteinander vernetzt, die als Datenquelle, Datensenke oder Transceiver aktiv sind und von denen mindestens ein Teil mit zwei oder mehr Transceiverbausteinen (TC) ausgerüstet ist, **dadurch gekennzeichnet, dass** in jeder Einheit (1-10) mit mehr als einem Transceiverbaustein (TC) nur eine einzige Netzwerkverwaltung für alls Transceiverbausteine (TC) dieser Einheit vorgesehen ist.

2. Verfahren nach Anspruch 1,
**dadurch gekennzeichnet, dass** das Netzwerk ein ringförmiges Netzwerk ist.

3. Verfahren nach Anspruch 3,
**dadurch gekennzeichnet, dass** es sich bei dem ringförmigen Netzwerk um ein MOST-Netzwerk handelt.
